# EUROPEAN PATENT APPLICATION

(11) **EP 1 988 371 A1**
(43) Date of publication of application: **05.11.2008**
(21) Application number: 08200014.2
(22) Date of filing: 11.04.2008
(51) Int. Cl.: G01F 15/00, G01F 15/14, G01F 15/18

(54) **Shroud for preventing removal of a water meter**

(30) Priority: 04.05.2007 GB 0708684; 07.09.2007 GB 0717414
(71) Applicant: Davies, Jason, Mid Glamorgan, South Wales CF46 6EN (GB)
(72) Inventor: Davies, Jason, Mid Glamorgan, South Wales CF46 6EN (GB)
(74) Representative: Evans, Huw David Duncan

(57) **Abstract**

A shroud for a water meter is disclosed, comprising a body and a cover. The body of the shroud comprises a base having an aperture and upstanding side walls, which define a cavity for receiving the water meter. The shroud is captively retained around the water meter preventing the removal of the water meter from its mounting.

## Description

The present invention relates to a shroud and particularly, but not exclusively, to a shroud for a water meter.

Water meters are typically housed within a chamber that is buried in the ground outside of the property. The chamber comprises a water inlet and a water outlet, with the outlet supplying water to the property. The water meter is provided between the inlet and the outlet, together with a stop-tap or isolation valve which is used to isolate the property from the water supply inlet.

As is well-known, the water meter is used to measure the volume of water consumed by the property for the purpose of determining the appropriate water bill. If the water bill is not timely paid then it is possible that the water authority may shut off the water supply to the property. This is done by first turning the stop-tap to the "off" position and then replacing the water meter with a so-called "no-flow" plug. The no-flow plug prevents water from entering the property regardless of the operating state of the stop-tap.

Customers who have had their water supply shut off have been found to replace the no-flow plug with so-called "flow" plugs so as to re-connect the water supply to the property. This is possible since flow plugs are readily available from plumbing outlets and more recently the internet.

A further major problem faced by the water industry today is that customers are removing the water meters themselves and replacing them with the flow plugs, which simply allow the flow of water into the property without providing any indication of the amount of water consumed. Since the meter readings are typically measured twice a year, it has been found that property owners replace the water meter in advance of the reading taking place. In this manner, the reading indicated on the meter will indicate significantly less water than that which has actually been consumed and therefore, the customer will receive a water bill which will be representative of less water than that which has actually been consumed. Accordingly, the water industry is losing significant revenue.

I have now devised a shroud which alleviates these problems.

In accordance with the present invention as seen from a first aspect, there is provided a shroud for a water meter, the shroud comprising a body and a cover, the body comprising a base having an aperture and upstanding side walls defining a cavity for receiving the water meter, wherein the shroud is captively retained around the water meter.

The water meter is preferably screwed to a mounting, which connects a water inlet to the meter with a water outlet, through the aperture. Preferably, the aperture is smaller than the cross-sectional area of the water meter and so the shroud is captively retained around the water meter by virtue of the aperture being unable to pass over the water meter.

Preferably, the body further comprises coupling means which couples the shroud to the mounting for the water meter.

The coupling means preferably comprises at least one resiliently biased clip arranged along the periphery of the aperture which is biased onto the mounting to prevent the removal of the shroud from the mounting.

Preferably, the cover comprises a mesh or solid cover.

The cover preferably comprises a transparent plastic cover so that the meter can be read without having to remove the cover.

Preferably, the transparent cover comprises a magnification window to magnify the size of the digits which indicate the meter reading.

Preferably, the cover abuts the upper surface of the water meter so that the water meter cannot be unscrewed. Alternatively, the cover preferably extends substantially across the width of the chamber and is spaced from the upper surface of the water meter. In this manner, the shroud prevents access to the water meter.

Additionally, the cover preferably prevents water and dirt from falling directly onto the water meter.

Preferably the body comprises a retaining bracket for retaining the cover to the frame.

Preferably, the body further comprises locking means for locking the cover to the frame.

The locking means preferably comprises a hasp or similar, upstanding from the body portion and which extends through a first aperture formed within the cover.

The cover is preferably locked to the body portion by passing a padlock or similar through the hasp.

The shroud may further comprise a tamper strip or ribbon secured between the cover and body to indicate whether the cover has been removed from the body.

Preferably, the body is formed as a one piece unit.

Preferably, the cover comprises a second aperture to provide access to a stop-tap arranged within the chamber and at least third one aperture to enable the cover to be removed from the frame.

In accordance with this invention as seen from a second aspect, there is provided a tool for removing the cover of the first aspect, the tool comprising a handle and at least one hooked member extending from the handle for engaging with the at least one third aperture formed within the cover, to enable the cover to be lifted from the frame.

In accordance with this invention as seen from a third aspect there is provided a chamber for a water meter, the chamber comprising a cover extending substantially across the width of the chamber intermediate opposite ends thereof, to prevent the removal of the water meter from the chamber.

The preferred embodiment of the present invention will now be described by way of example only, and with reference to the accompanying drawings, in which:
Figure 1 is an exploded view of the water chamber containing the shroud of the present invention;
Figure 2 is a perspective view of the shroud of the present invention comprising a stop-tap key;
Figure 3 is an exploded view of the shroud and stop-tap key of figure 2;
Figure 4 is a perspective view of the tool of the second aspect of the present invention; and,
Figure 5 is a sectional view of the chamber according to the third aspect of the present invention.

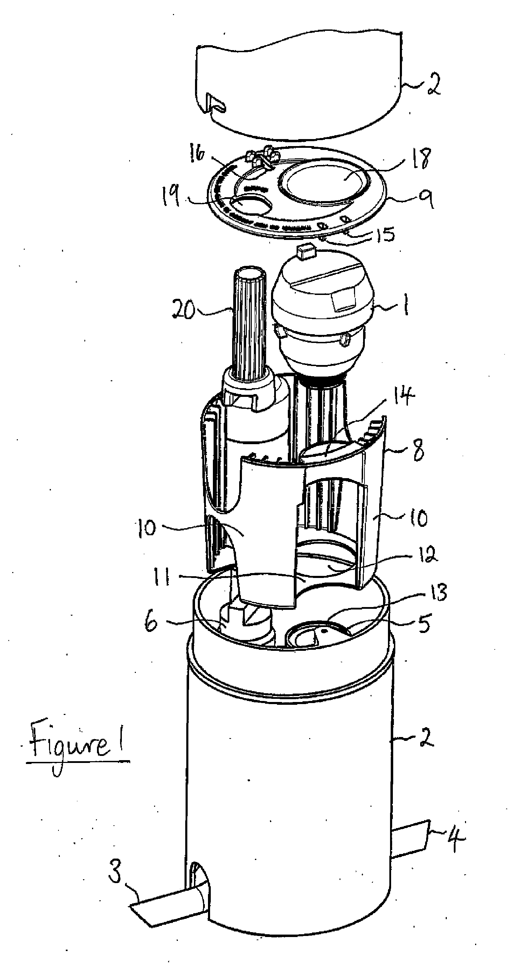

Referring to figure 1, there is illustrated a water meter 1 arranged within a chamber 2. The water meter 1 is connected between the water inlet 3 and outlet 4 to the chamber 2 by a mounting 5, which comprises a screw thread (not shown) to enable the water meter 1 to be screwed onto the mounting 5. The chamber 2 further comprises an isolation valve or stop tap 6 which serves to switch the water supply to a property (not shown) on or off. The water meter 1 further comprises a window (not shown) for reading the amount of water consumed by the property (not shown).

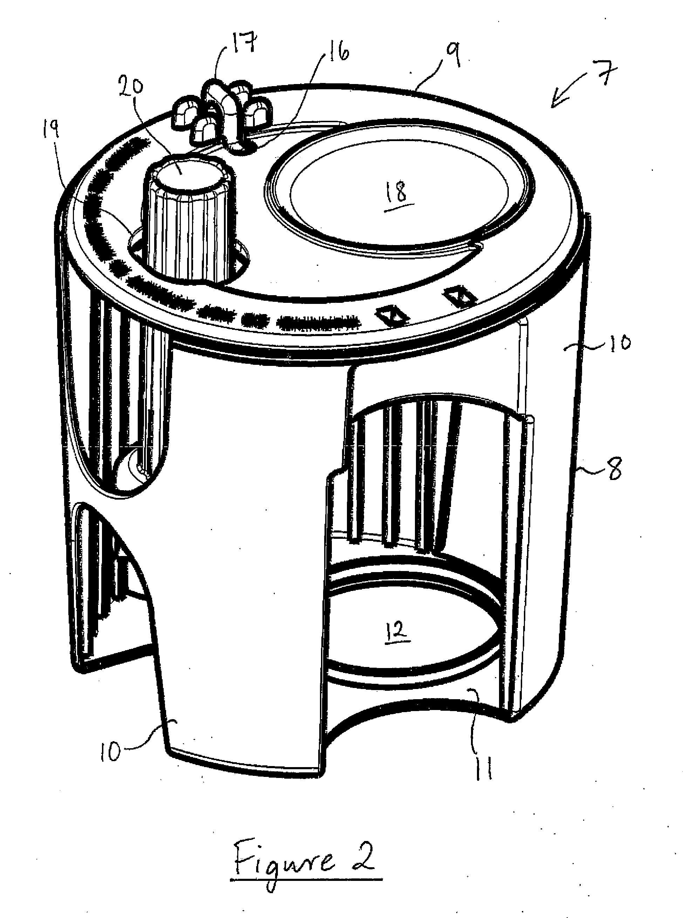

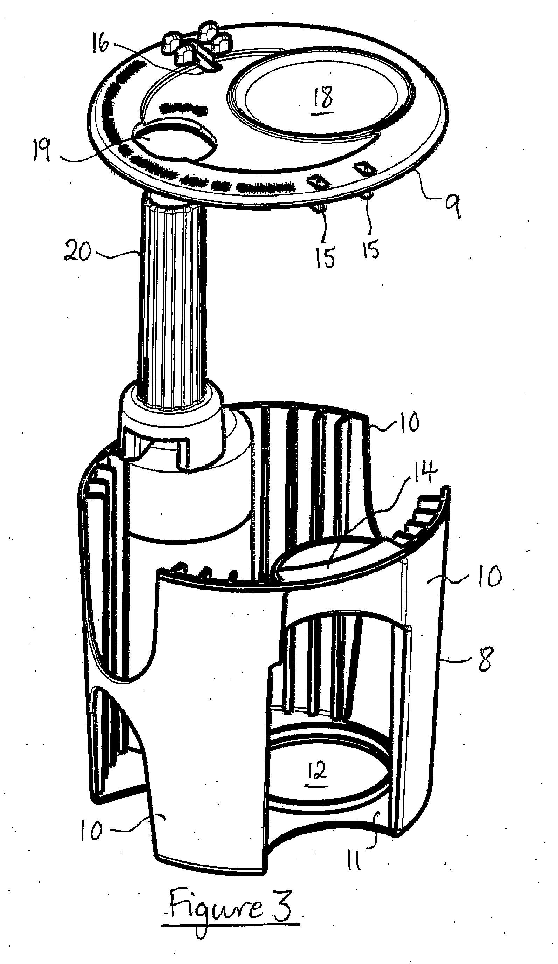

Referring to figures 2 and 3, the shroud 7 of the present invention comprises a body 8 for supporting a cover 9 above the water meter 1, within the chamber 2. The body 8 comprises side walls 10 and a base section 11 arranged at its lower end which comprises an aperture 12 that is arranged to fit over the mounting 5.

The base section 11 further comprises a series of retaining clips (not shown) formed integrally with the base section 11 and which are resiliently biased to clip under a flange 13 which extends along a periphery of the mounting 5. The clips (not shown) comprise a finger press (not shown) which enables a user to prise the clips from under the flange 13 to remove the body 8 from the mounting 5.

The upper section of the body 8 comprises a retaining plate 14 for retaining the cover 9, and a hasp 17 upstanding from the body 8. The plate 14 cooperates with a pair of retaining barbs 15 formed on the underside of the cover 9, which slide under the plate 14 and prevent one side of the cover 9 from being lifted from the body 8. The opposite side of the cover 9 comprises an aperture 16 through which the hasp 17 extends so that a padlock (not shown) or similar can be passed through the hasp 17 to lock the cover 9 to the body 8.

The cover 9 extends substantially across the full inner width of the chamber 2 and is supported above the water meter 1 by the side walls 10 of the body 8. In this manner, when the cover 9 is locked to the body 8, the water meter 1 cannot be accessed to enable it to be unscrewed from the mounting 5.

The cover 9 is formed of a transparent plastic material, however, it is also envisaged that the cover could be formed of a mesh, so that the water meter 1 can be read even with the cover secured to the body 8. In addition, to further enhance the reading of the meter, it is preferred that the cover 9 comprises a magnification window 18 arranged above the meter reading window (not shown), so as to magnify the digits of the reading.

Arranged within the cover 9, there is also provided an aperture 18 arranged substantially above the stop-tap 6. The aperture 19 enables a key 20 to be passed into the shroud 7 to manipulate the stop-tap 6.

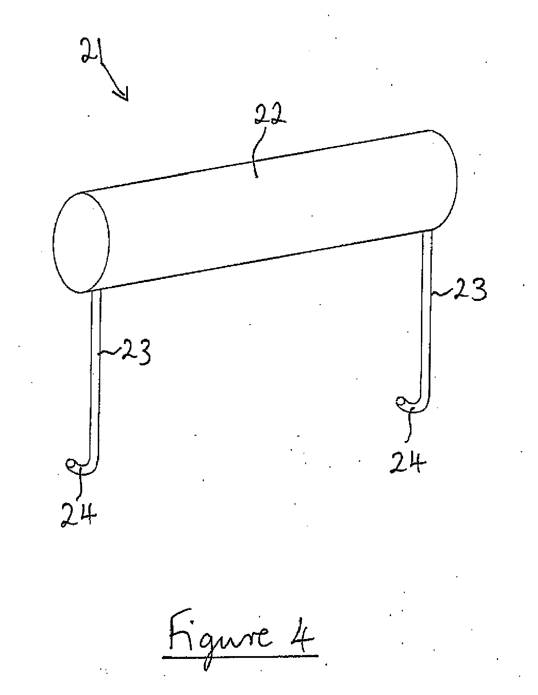

The cover 9 preferably comprises two further apertures (not shown) arranged substantially centrally of the cover 9, which are used to remove the cover 9 from the body 8 using a tool 21, as shown in figure 4.

Referring to figure 3, the tool 21 comprises a handle 22 and two arms 23 extending from the handle 22. At the lower end of each arm 23 there is provided a hook 24. The arms 23 and thus the hooks 24 are separated by a distance which corresponds with the separation of the two apertures (not shown), such that the hooks 24 can be simultaneously passed through the apertures (not shown), to enable the cover 9 to be lifted from the body 8 once the cover 9 has been unlocked from the body 8.

To fit the shroud 7, the stop-tap 6 is first switched to the off position to isolate the water meter 1 from the water supply. The water meter 1 is then unscrewed from the mounting 5 and the base section 11 of the body 8 is then pushed over the mounting 5 until the clips (not shown) snap over the peripherally extending flange 13 to lock the body 8 in place. The water meter 1 is then passed into the body 8 and screwed into the mounting 5 through aperture 12.

With the body 8 firmly in place, the barbs 15 arranged on the underside of the cover 9 are then located under the retaining plate 14 formed on the upper section of the body 8. Alternatively, the cover 9 may be pivotally secured to the upper section of the body 8, in which case the cover 9 is lowered onto the upper section of the body 8. The cover 9 is then locked to the body 8 by passing a padlock (not shown) or similar through the hasp 17. The stop-tap 6 may then be switched to the on state by passing the key 19 through aperture 18.

With the cover 9 firmly in place, the meter 1 cannot be accessed to unscrew it from the mounting 5 since the cover 9 extends across the width of the chamber 2. Furthermore, even if the body 8 were to become detached from the mounting 5, the aperture 12 formed within the base section 11 is too small to pass over the water meter 1 and so the cover 9 would still prevent access to the water meter 1.

The shroud 7 of the present invention would also prevent access to no-flow plugs (not shown) that may be inserted into the mounting 5 to prevent the flow of water into a property. In addition, the arrangement of clips (not shown) on the base section 11 of the body 8 enable the shroud 7 to be retrofitted to existing water meter chambers 2.

In the event that the cover 9 is forcibly removed, it is envisaged that a tamper strip or ribbon (not shown) may be secured between the body 8 and cover 9 such that the cover 9 could not be removed from the body 8 without first cutting or breaking the ribbon. A broken or missing tamper strip would therefore indicate that the cover 9 has been removed and so the water meter 1 may have potentially been removed in order to conceal the actual amount of water consumed by the property.

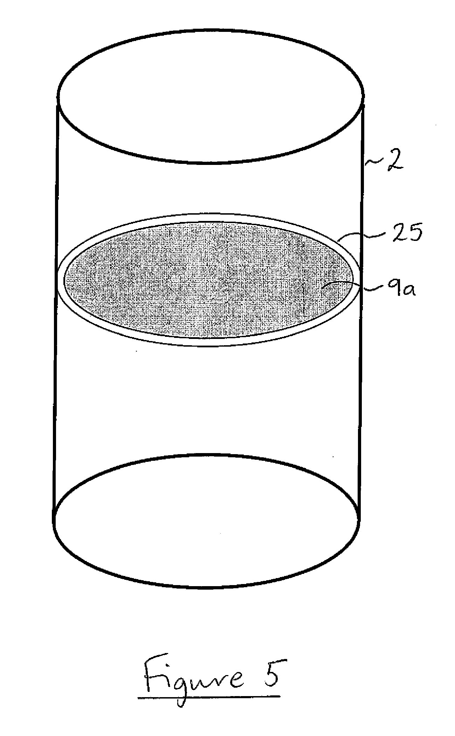

It is also envisaged that the chamber 2 could be formed with an integral support or flange 25 for supporting a cover 9a across the inside of the chamber 2, as shown in figure 5. In this manner, the cover 9a is lockably secured to the flange 25, which extends around the inner surface of the chamber 2, via locking means (not shown), to further prevent the removal of and/or access to the water meter 1.

Accordingly, from the foregoing it is evident that the shroud of the present invention provides a simple yet effective means of preventing unauthorised access to water meters.

## Claims

1. A shroud for a water meter, said shroud comprising a body and a cover, said body comprising a base having an aperture and upstanding side walls defining a cavity for receiving said water meter, wherein said shroud is captively retained around said water meter.

2. A shroud according to claim 1, wherein said aperture is smaller than the cross-sectional area of said water meter.

3. A shroud according to claim 1 or 2, wherein said body further comprises coupling means which couples said shroud to a mounting for said water meter.

4. A shroud according to claim 3, wherein said coupling means comprises at least one resiliently biased clip arranged along the periphery of said aperture and which is biased onto the mounting to prevent the removal of said shroud from the mounting.

5. A shroud according to any preceding claim, wherein said cover comprises a mesh or solid cover.

6. A shroud according to any preceding claim, wherein said cover comprises a transparent plastic cover so that said meter can be read without having to remove said cover.

7. A shroud according to claim 6, wherein said transparent cover comprises a magnification window to magnify the size of the digits which indicate the meter reading.

8. A shroud according to any preceding claim wherein said cover abuts the upper surface of said water meter.

9. A shroud according to any of claims 1 to 7, wherein said cover extends substantially across the width of a water meter chamber and is spaced from the upper surface of said water meter.

10. A shroud according to any preceding claim, wherein the cover prevents water and dirt from falling directly onto the water meter.

11. A shroud according to any preceding claim, wherein said body comprises a retaining bracket for retaining said cover to said frame.

12. A shroud according to any preceding claim, wherein said body further comprises locking means for locking said cover to said frame.

13. A shroud according to claim 12, wherein said locking means comprises a hasp or similar, upstanding from said body portion, which is arranged to extend through a locking aperture formed within said cover.

14. A shroud according to any preceding claim, wherein the cover further comprises an access aperture to provide access to a stop-tap arranged within the chamber and at least one tool aperture to enable the cover to be removed from the frame.

15. A shroud according to any preceding claim, further comprising a tamper strip or ribbon secured between the cover and body to indicate whether the cover has been removed from the body.
